# EUROPÄISCHE PATENTSCHRIFT

(11) **EP 1 764 674 B1**
(45) Veröffentlichungstag und Bekanntmachung des Hinweises auf die Patenterteilung: **13.06.2012**
(21) Anmeldenummer: 06007647.8
(22) Anmeldetag: 12.04.2006
(51) Int. Cl.: G06F 3/01, B60K 37/02, B60K 37/06, G06F 3/033

(54) **Eingabevorrichtung**
Input device
Dispositif d'introduction

(30) Priorität: 14.09.2005 US 717088 P; 20.10.2005 US 728656 P
(43) Veröffentlichungstag der Anmeldung: 21.03.2007
(73) Patentinhaber: Volkswagen AG, 38436 Wolfsburg (DE)
(72) Erfinder: Prados, Michael, 94304 Palo Alto (US)

(56) Entgegenhaltungen:
- EP-A1- 1 544 720
- EP-A1- 1 571 032
- EP-A2- 1 560 102
- WO-A1-2004/081776
- WO-A2-2004/097573
- JP-A- 9 167 541
- US-A- 6 118 435
- US-A1- 2003 067 449
- US-A1- 2003 184 574

## Beschreibung

Die Erfindung betrifft eine Eingabevorrichtung, insbesondere für ein Kraftfahrzeug, mit einem Touchscreen.

Die EP 1 571 032 A1 offenbart ein Informationssystem für ein Fahrzeug mit einem Primärdisplay und Primäreingabemitteln zur Eingabe in einen Computer des Fahrzeugs. Zudem ist ein Fern-Kommunikator vorgesehen, der operativ mit dem Computer verbunden und gegenüber dem Fahrzeug beweglich ist. Dieser Fern-Kommunikator umfasst ein Sekundärdisplay und Sekundäreingabemittel.

Die EP 1 544 720 A1 offenbart einen PDA mit einer Displayeinheit, einem Touchpanel zur Eingabe von Befehlen sowie Mittel zum Generieren von Vibrationen, die piezoelektrische Elemente umfassen.

Ein Touchscreen ist z.B. aus der DE 201 02 197 U1 bekannt. In der DE 201 02 197 U1 ist ein Touchscreen zur Visualisierung von elektronischen Signalen und einer bestätigenden Berührungseingabe von Zeichen und Symbolen bestehend aus einer Funktionsebene zur Visualisierung und Tasteingabe und einer hierzu korrespondierenden, höher gelegenen, punktuell deformierbaren Schutzebene offenbart. Dabei wird bei einer Auswahl bestimmter Punkte der Funktionsebene mittels Berührung über die Schutzebene hinweg mindestens ein Bestätigungssignal für den Tastsinn (haptischer Reiz) des Benutzers wahrnehmbar an der Position des Berührungspunktes in der deformierten Schutzebene erzeugt und das Bestätigungssignal für den Tastsinn (haptischer Reiz) durch exzentrisch, inner- und/oder unterhalb der Funktionsebene angeordnete Schwingungselemente erzeugt. Zudem erfolgt bei dem aus der DE 201 02 197 U1 bekannten Touchscreen die Weiterleitung der erzeugten Schwingungen von der Funktions- auf die Schutzebene durch direkten Kontakt der beiden Ebenen und/oder über die Randbereiche der Ebenen durch starre oder elastische Verbindungselemente.

Touchscreens sind zudem z.B. aus der US 4 885 565 und der EP 920 704 B1 bekannt. Geeignete Touchscreens können z.B. Touchscreens von 3M™ (siehe www.3m.com) bezogen werden. Weitere Einzelheiten zu Touchscreens können z.B. der EP 1 560 102 A1 entnommen werden.

Aus der DE 201 80 024 U1 bzw. der korrespondierenden WO 01/54109 A1 ist zur haptischen Rückkopplung zudem eine Berührungssteuerung mit haptischer Rückkopplung zur Eingabe von Signalen in einen Computer und zur Ausgabe von Kräften an einen Benutzer der Berührungssteuerung bekannt, wobei die Berührungssteuerung ein Berührungseingabegerät aufweist, das eine annähernd ebene Berührungsoberfläche aufweist, die derart betrieben wird, dass sie aufgrund einer Position auf der Berührungsoberfläche, die ein Benutzer berührt, ein Positionssignal in einen Prozessor des Computers eingibt, wobei das Positionssignal die Position in zwei Dimensionen wiedergibt. Die Berührungssteuerung gemäß der WO 01/54109 A1 weist zudem mindestens einen mit dem Berührungseingabegerät verbundenen Aktor auf, wobei der Aktor eine Kraft auf das Berührungseingabegerät ausgibt, um dem die Berührungsoberfläche berührenden Benutzer eine haptische Empfindung zu liefern, wobei der Aktor die Kraft aufgrund einer von dem Prozessor ausgegebenen Kraftinformation direkt auf das Berührungseingabegerät ausgibt.

Haptische Rückkopplung ist zudem aus der US 6 429 846, der WO 03/038800 A1, der US 5 988 902, der WO 99/26230 A1, der WO 97/21160 A1, der DE 200 22 244 U1, der WO 03/41046 A1, der WO 2004/081776 A1, der US 2003/0067449 A1 und der US 2003/0184574 A1bekannt.

Die US 6 118 435 offenbart ein Touchpanel.

Aus der DE 197 31 285 A1 ist ein Bedienelement für eine Einrichtung mit mehreren wählbaren Menüs, Funktionen und/oder Funktionswerten bekannt, das eine Oberfläche besitzt, die durch den Bediener erfassbar ist und über die die Auswahl durch eine lokale Bewegung bzw. Berührung der Oberfläche vernehmbar ist. Die Oberfläche ist in ihrer Gestalt entsprechend dem/der gewählten und/oder auswählbaren Menü, Funktion und/oder Funktionswert veränderbar.

Die PCT/EP2005/008634 beschreibt eine Bedienvorrichtung zur Bedienung einer Recheneinrichtung, insbesondere eine Bedienvorrichtung zur Bedienung einer Recheneinrichtung zur Steuerung von Funktionen in einem Kraftfahrzeug, wobei die Bedienvorrichtung ein Display zur optischen Darstellung von Informationen, einen über dem Display angeordneten Touchscreen zur Eingabe von Befehlen durch Berühren des Touchscreens oder durch Drücken auf den Touchscreen und einen Aktor zum Bewegen des Touchscreens umfasst, und wobei die Bedienvorrichtung eine interne Steuerung zur Ansteuerung des Aktors zum Bewegen des Touchscreens bei Berühren des Touchscreens oder bei Drücken auf den Touchscreen in einem für eine haptische Rückkopplung vorgesehenen Bereich des Touchscreens aufweist.

Es ist Aufgabe der Erfindung, eine Eingabevorrichtung mit einem Touchscreen zu verbessern. Es ist wünschenswert, eine besonders gut für Kraftfahrzeuge geeignete Eingabevorrichtung zu schaffen. Dabei sollen insbesondere die Kosten für Eingabevorrichtungen gesenkt werden.

Vorgenannte Aufgabe wird durch eine Eingabevorrichtung gemäßt Anspruch 1 gelöst.

Ein Touchscreen im Sinne der Erfindung ist insbesondere ein transparenter Touchscreen. Ein Display im Sinne der Erfindung ist insbesondere ein Display bzw. Matrixdisplay zur variablen Darstellung von Informationen. Ein Display im Sinne der Erfindung kann z.B. ein TFT sein.

In einer Ausgestaltung der Erfindung umfasst die Steuerung eine Schaltung zur Auswertung eines Ausgangssignals des Touchscreens und/oder eine Schaltung zur Steuerung des Displays.

In einer weiteren Ausgestaltung der Erfindung ist die Steuerung als Platine (printed circuit board) ausgestaltet. In einer Ausgestaltung der Erfindung umfasst die Platine eine Schaltung zur Auswertung eines Ausgangssignals des Touchscreens und/oder eine Schaltung zur Steuerung des Displays.

Eine Schaltung im Sinne der Erfindung soll auch eine Ausgestaltung in Form eines ASICS oder eines entsprechend programmierten Prozessors umfassen.

In einer weiteren Ausgestaltung der Erfindung ist die Schnittstelle zur drahtlosen Datenübertragung, z.B. als Bluetooth-Schnittstelle, 802.11, Ultra Wide Band etc., ausgestaltet.

Vorgenannte Aufgabe wird zudem durch ein Kraftfahrzeug mit einer eines oder mehrere der vorgenannten Merkmale umfassenden Eingabevorrichtung.

In einer Ausgestaltung der Erfindung umfasst das Kraftfahrzeug eine Haltevorrichtung zur lösbaren Befestigung der Eingabevorrichtung. In einer weiteren Ausgestaltung der Erfindung ist die Haltevorrichtung in ein Lenkrad, in eine Mittelkonsole oder in ein Armaturenbrett integriert oder an einem Lenkrad, an einer Mittelkonsole oder an einem Armaturenbrett angeordnet ist.

In einer weiteren Ausgestaltung der Erfindung umfasst das Kraftfahrzeug eine zu der Eingabevorrichtungs-Schnittstelle korrespondierende Kraftfahrzeug-Schnittstelle.

In einer weiteren Ausgestaltung der Erfindung umfasst das Kraftfahrzeug ein mittels der Eingabevorrichtung bedienbares Funktionsmodul, wobei insbesondere vorgesehen ist, dass das Funktionsmodul mittels der Eingabevorrichtung bedienbar ist, wenn die Eingabevorrichtung nicht in der Haltevorrichtung angeordnet ist.

Nach der Erfindung umfasst die Eingabevorrichtung weiterhin eine Eingabevorrichtungs-Schnittstelle zur Ausgabe einer Information über einen durch Berühren der Bedienfläche des Touchscreens eingegebenen Befehl.

Die Masse des Touchscreens soll im Sinne der Erfindung insbesondere auch die Masse eines fest mit dem Touchscreen verbundenen steifen Körpers umfassen. Partikel im Sinne der Erfindung umfassen insbesondere Staubpartikel.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Eine Berührung des Touchscreens kann im Sinne der Erfindung auch oder nur ein Drücken auf den Touchscreen sein.

Weitere Vorteile und Einzelheiten ergeben sich aus der nachfolgenden Beschreibung von Ausführungsbeispielen. Dabei zeigen:
- Fig. 1: ein Ausführungsbeispiel für ein Cockpit eines Kraftfahrzeuges,
- Fig. 2: ein Ausführungsbeispiel einer Eingabevorrichtung mit einer zugeordneten Steuerung in einer Prinzipdarstellung,
- Fig. 3: ein Ausführungsbeispiel einer Schnittstelle,
- Fig. 4: ein Ausführungsbeispiel für die Integration einer Eingabevorrichtung in ein Kraftfahrzeug
- Fig. 5: die Eingabevorrichtung gemäß Fig. 2 in einer perspektivischen Draufsicht,
- Fig. 6: die Eingabevorrichtung gemäß Fig. 2 in einem Querschnitt,
- Fig. 7: eine abgewandelte Ausgestaltung der Eingabevorrichtung gemäß Fig. 2 in einem Querschnitt,
- Fig. 8: eine weitere abgewandelte Ausgestaltung der Eingabevorrichtung gemäß Fig. 2 in einem Querschnitt,
- Fig. 9: ein weiteres Ausführungsbeispiel einer Eingabevorrichtung in einer perspektivischen Draufsicht,
- Fig. 10: ein Ausführungsbeispiel eines gefalteten oder ausgestülpten Bereichs,
- Fig. 11: ein weiteres Ausführungsbeispiel eines gefalteten oder ausgestülpten Bereichs,
- Fig. 12: ein weiteres Ausführungsbeispiel eines gefalteten oder ausgestülpten Bereichs,
- Fig. 13: ein weiteres Ausführungsbeispiel einer Eingabevorrichtung in einer perspektivischen Draufsicht,
- Fig. 14: ein Ausführungsbeispiel einer Auslenkung eines Touchscreens,
- Fig. 15: ein weiteres Ausführungsbeispiel einer Auslenkung eines Touchscreens,
- Fig. 16: ein weiteres Ausführungsbeispiel einer Auslenkung eines Touchscreens und
- Fig. 17: die Herstellung von im Wesentlichen baugleichen Eingabevorrichtungen für eine Anwendung in einem Kraftfahrzeug und für zumindest eine weitere, nicht für ein Kraftfahrzeug vorgesehene, Anwendung.

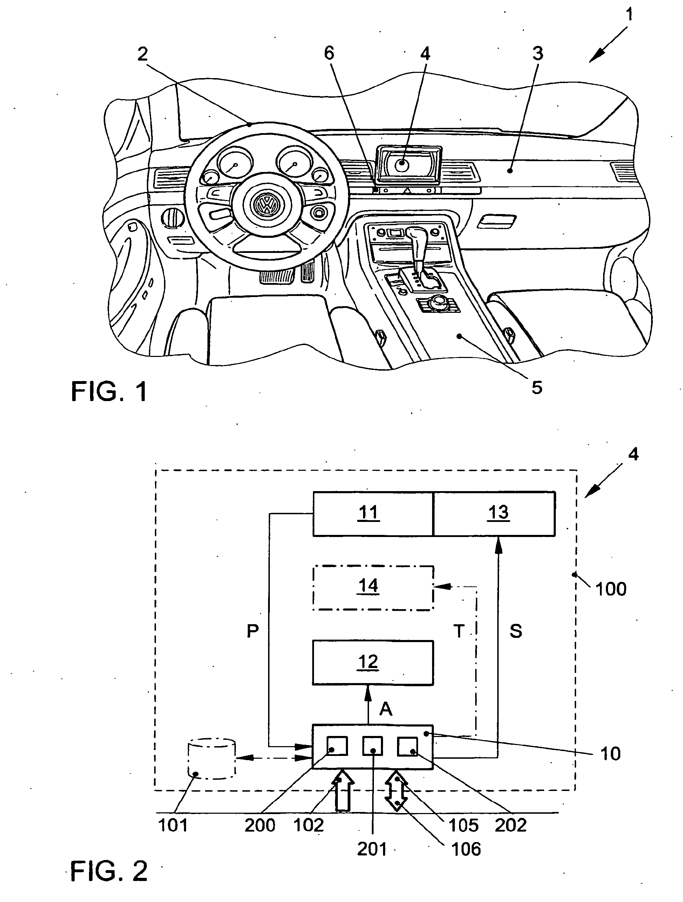

Fig. 1 zeigt ein Ausführungsbeispiel eines Kraftfahrzeuges 1 in einer Innenansicht. In dem Kraftfahrzeug 1 ist unterhalb eines Armaturenbretts 3 ein Lenkrad 2 angeordnet. Das Armaturenbrett 3 weist eine neben dem Lenkrad 2 angeordnete Eingabevorrichtung 4, zur Bedienung des Kraftfahrzeuges 1 bzw. eines Funktionsmoduls des Kraftfahrzeuges 1, wie z.B. einer Klimaanlage, eines Navigationssystems, eines Infotainmentsystems, einer Telefonschnittstelle und/oder eines Telefons, auf. Alternativ oder zusätzlich kann eine der Eingabevorrichtung 4 entsprechende Eingabevorrichtung auch in dem Lenkrad 2 oder in einer Mittelkonsole 5 angeordnet sein. Zur Aufnahme der Eingabevorrichtung 4 umfasst das Kraftfahrzeug 1 eine Haltevorrichtung 6. Es kann vorgesehen sein, dass die Eingabevorrichtung 4 von einem Bediener aus der Haltevorrichtung 6 entnehmbar ist. Es kann darüber hinaus vorgesehen sein, dass das Kraftfahrzeug 1 bzw. das Funktionsmodul mittels der Eingabevorrichtung 4 bedienbar ist, wenn die Eingabevorrichtung nicht in der Haltevorrichtung 6 angeordnet ist.

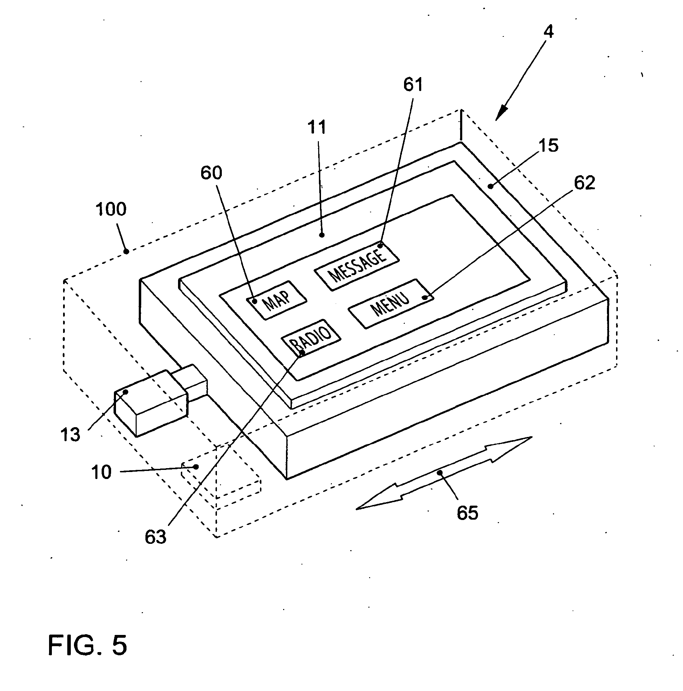

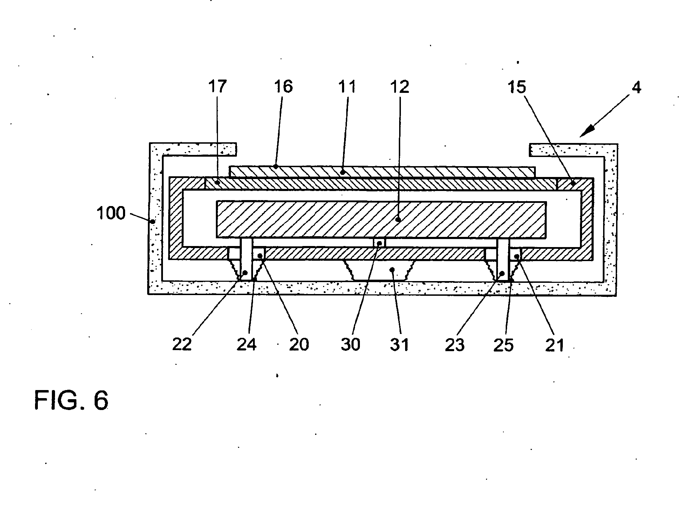

Fig. 2 zeigt die Eingabevorrichtung 4 in einer Prinzipdarstellung. Fig. 5 zeigt die Eingabevorrichtung 4 in einer perspektivischen Draufsicht. Fig. 6 zeigt die Eingabevorrichtung 4 in einem Querschnitt. Die Eingabevorrichtung 4 umfasst ein Gehäuse 100, ein in dem Gehäuse 100 angeordnetes Innengehäuse 15, ein in dem Innengehäuse 15 angeordnetes Display 12 zur optischen Darstellung von Informationen, wie zum Beispiel die in Fig. 5 mit Bezugszeichen 60, 61, 62 und 63 bezeichneten Bedienelemente, einen über dem Display 12 angeordneten und mit dem Innengehäuse 15 verbundenen Touchscreen 11 zur Eingabe von Befehlen durch Berühren einer Bedienfläche 16 des Touchscreens 11 und einen Aktor 13 zum Bewegen des Innengehäuses 15 und damit des Touchscreens 11 gegenüber dem Display 12 in Richtung des Doppelpfeils 65.

Der Eingabevorrichtung 4 ist eine als Platine ausgestaltete Steuerung 10 zugeordnet. Die Steuerung 10 umfasst eine Schaltung 200 zur Steuerung des Displays 12, mittels der durch Ausgabe eines entsprechenden Anzeigesignals A auf dem Display 12 unterschiedliche Informationen dargestellt werden können. Die Steuerung 10 umfasst zudem eine Schaltung 201 zur Auswertung eines Ausgangssignals des Touchscreens 11 bzw. eines von dem Touchscreen 11 ausgegebenen Positionssignals P, das die Position einer Berührung der Bedienfläche 16 oder eines Drückens auf die Bedienfläche 16 angibt. Zudem umfasst die Steuerung 10 eine Schaltung 202 zur Bewegung des Aktors 13 durch Ausgabe eines Aktorsteuersignals S. Es kann vorgesehen sein, dass die Eingabevorrichtung 4 eine zwischen dem Touchscreen 11 und dem Display 12 angeordnete Schicht 14 mit einstellbarer Transparenz umfasst. In diesem Fall ist vorgesehen, dass die Transparenz der Schicht 14 mit einstellbarer Transparenz mittels der Steuerung 10 durch Ausgabe eines Transparenz-Steuersignals T einstellbar ist.

Die Eingabevorrichtung 4 umfasst optional einen, insbesondere wechselbaren, Akku 101. Eine Ladeschaltung zum Aufladen des Akkus 101 kann ebenfalls in der Steuerung 10 implementiert sein.

Die Eingabevorrichtung 4 umfasst eine Eingabevorrichtungs-Schnittstelle 105 u. a. zur Ausgabe einer Information über einen durch Berühren der Bedienfläche des Touchscreens 11 eingegebenen Befehl. Das Kraftfahrzeug 1 umfasst eine zu der Eingabevorrichtungs-Schnittstelle 105 korrespondierende Kraftfahrzeug-Schnittstelle 106. Die Eingabevorrichtungs-Schnittstelle 105 kann zur drahtlosen Datenübertragung, z.B. als Bluetooth-Schnittstelle, 802.11, Ultra Wide Band etc., ausgestaltet sein. Die Eingabevorrichtung 4 umfasst außerdem eine Energieversorgungs-Schnittstelle 102, über die die Steuerung 10 bzw. die Eingabevorrichtung 4 mit elektrischer Energie versorgt werden kann. Die Energieversorgung kann dabei drahtlos (z.B. induktiv) erfolgen.

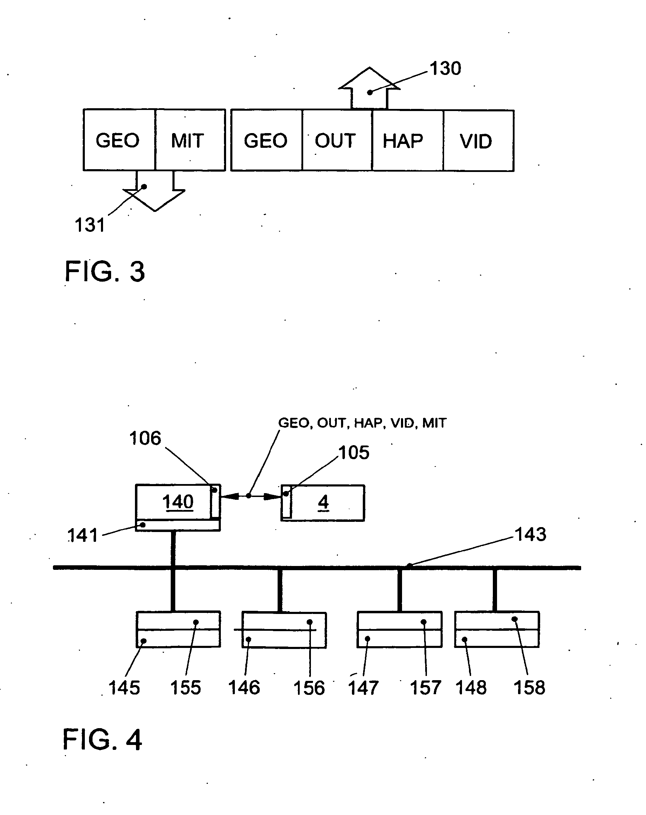

Die Eingabevorrichtungs-Schnittstelle 105 kann in beispielhafter Ausgestaltung entsprechend einer in der PCT/EP2005/008634 beschriebenen Schnittstelle ausgestaltet sein, so dass über die Eingabevorrichtungs-Schnittstelle 105 ein schematisch in Fig. 3 dargestellter Informationsaustausch erfolgt, wobei die dem Pfeil 130 zugeordneten Informationen von der Eingabevorrichtung 4 einlesbare Informationen und die dem Pfeil 131 zugeordneten Informationen von der Eingabevorrichtung 4 ausgebbare Informationen bezeichnen. Die von der Eingabevorrichtung 4 einlesbaren Informationen umfassen
- eine geographische Angabe GEO zur Definition eines Punktes und/oder einer Fläche auf dem Touchscreen 11,
- eine der geographischen Angabe GEO zugeordnete Ausgabeanweisung OUT zur Angabe, ob bei einem Berühren des Touchscreens 11 und/oder bei einem Drücken auf den Touchscreen 11 an einer der geographischen Angabe GEO entsprechenden Stelle des Touchscreens 11 eine Mitteilung MIT über das Berühren des Touchscreens 11 und/oder des Drückens auf den Touchscreen 16 von der Eingabevorrichtung 4 auszugeben ist,
- (optional) eine der geographischen Angabe GEO zugeordnete Haptikangabe HAP zur Angabe der Art der haptischen Reaktion bei Berühren des Touchscreens 16 und/oder bei Drücken auf den Touchscreen 11 und
- ein der geographischen Angabe GEO zugeordnetes Bildsignal VID zur Darstellung auf dem Display 12.

Die von der Eingabevorrichtung 4 ausgebbaren Informationen umfassen die Mitteilung MIT über das Berühren des Touchscreens 11 und/oder des Drückens auf den Touchscreen 11 und ggf. die entsprechende geographische Angabe GEO, wo das Berühren des Touchscreens 11 und/oder das Drücken auf den Touchscreen 11 erfolgt ist.

Mittels der Eingabevorrichtung 4 sind - wie in Fig. 4 dargestellt - eine Klimaanlage 145 des Kraftfahrzeuges 1, ein Navigationssystem 146 des Kraftfahrzeuges 1, ein Infotainmentsystem 147 des Kraftfahrzeuges 1 und/oder ein Telefon 148 im Kraftfahrzeug 1 bedienbar. Dazu ist die Eingabevorrichtung 4 (über die Eingabevorrichtungs-Schnittstelle 105) mit einem. Anzeigesteuergerät 140 verbunden, das über eine Schnittstelle 141 und über ein Bussystem 143 datentechnisch mit der Klimaanlage 145 bzw. einer der Klimaanlage 145 zugeordneten Steuerung 155, mit dem Navigationssystem 146 bzw. einer dem Navigationssystem 146 zugeordneten Steuerung 156, mit dem Infotainmentsystem 147 bzw. einer dem Infotainmentsystem 147 zugeordneten Steuerung 157 und/oder mit dem Telefon 148 bzw. einer dem Telefon 148 zugeordneten Steuerung 158 verbunden ist. Über die Schnittstelle 140 ist mittels eines Protokolls kommunizierbar, dass ein Operationsfeld zur Identifikation einer mittels der den Betrieb des Kraftfahrzeuges betreffenden Information auszuführenden Aufgabe, ein Datenfeld mit einem Wert für die den Betrieb des Kraftfahrzeuges betreffende Information und ein ID-Feld zur Identifikation der den Betrieb des Kraftfahrzeuges betreffenden Information umfasst.

Wie in Fig. 6 erkennbar- ist der Touchscreen 11 außen an dem Innengehäuse 15 befestigt. Das Innengehäuse 15 ist dabei zumindest in dem mit Bezugszeichen 17 bezeichneten Bereich unterhalb des Touchscreens 11 transparent. Alternativ kann der Touchscreen 11 auch als Teil des Innengehäuses 15 ausgestaltet sein. Das Innengehäuse 15 umfasst vier je durch eine flexible Manschette 24 bzw. 25 (in Fig. 6 sind nur zwei Manschetten sichtbar) abgedeckte Öffnungen 20 und 21 (in Fig. 6 sind nur zwei Öffnungen sichtbar), durch die Befestigungselemente 22 und 23 (in Fig. 6 sind nur zwei Befestigungselemente sichtbar) zur Fixierung des Displays 12 in dem Gehäuse 100 geführt sind. Das Innengehäuse 15 umfasst zudem eine weitere durch eine weitere flexible Manschette 31 abgedeckte Öffnung, durch die eine Zuleitung 30 zur Übertragung des Anzeigesignals A zum Display 12 (und ggf. zur Energieversorgung des Displays 12) geführt ist. Die flexiblen Manschetten 24, 25, 26, 27 und 31 können z.B. aus einem Elastomer bestehen oder ein Elastomer umfassen. Es ist insbesondere vorgesehen, dass die Flexibilität der Manschetten 24, 25, 26, 27 und 31 mit der Masse des Innengehäuses 15 einschließlich des Touchscreens 11 derart abgestimmt ist, dass das Innengehäuse 15 (einschließlich des Touchscreens 11) in Verbindung mit den Manschetten 24, 25, 26, 27 und 31 eine mechanische Eigenfrequenz zwischen 5Hz und 150Hz aufweist. Dabei wird die Eigenfrequenz insbesondere auf den Aktor 13 abgestimmt bzw. der Aktor 13 entsprechend der Eigenfrequenz ausgewählt.

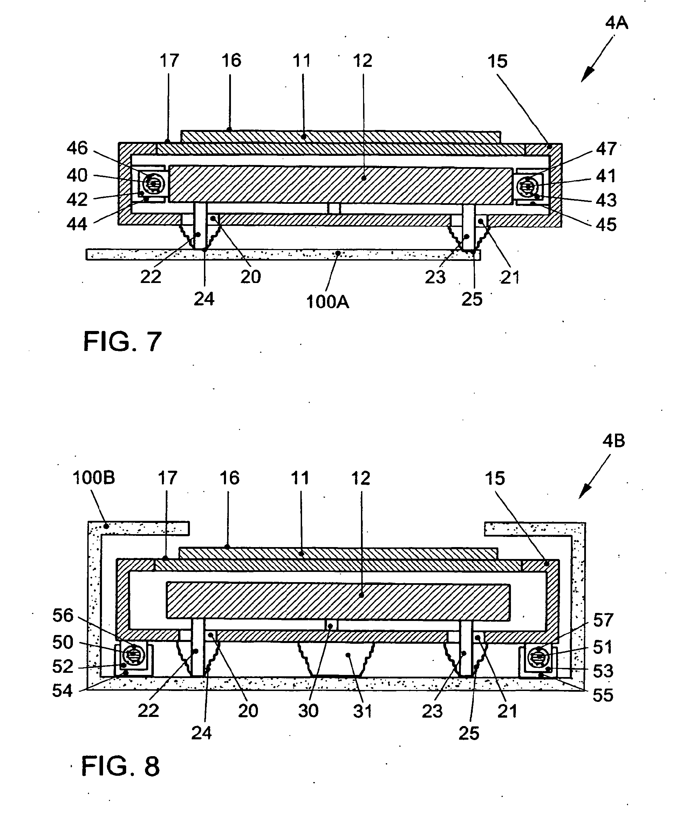

Fig. 7 zeigt eine gegenüber der Eingabevorrichtung 4 abgewandelte Eingabevorrichtung 4A in einem Querschnitt, wobei gleiche Bezugszeichen wie in Fig. 2, Fig. 5 und Fig. 6 gleiche oder gleichartige Elemente bezeichnen. Die Eingabevorrichtung 4A umfasst Verbindungselemente zum derartigen formschlüssigen Verbinden des Innengehäuses 15 mit dem Display 12, so dass das Innengehäuse 15 gegenüber dem Display 12 nur entlang einer Geraden bewegbar ist. Dazu umfasst ein Verbindungselement zumindest ein mit dem Innengehäuse 15 verbundenes Befestigungselement 44 bzw. 45 zur Fixierung je einer Stange 40 bzw. 41. Zudem umfasst ein Verbindungselement zumindest je ein mit dem Display 12 verbundenes Gleitelement 42 bzw. 43 mit je zumindest einem Gleitlager 46 bzw. 47, mittels dessen das Gleitelement 42 bzw. 43 entlang der Stange 40 bzw. 41 bewegbar ist. Es kann auch vorgesehen sein, dass das Gleitelement 42 bzw. 43 mit dem Innengehäuse 15 und das Befestigungselement 44 bzw. 45 mit dem Display 12 (fest) verbunden ist. Die Befestigungselemente 22 und 23 sind bei der Eingabevorrichtung 4A mit einem Arretierungsrahmen 100A verbunden, mittels dessen die Eingabevorrichtung 4A in der Haltevorrichtung 6 lösbar arretiert werden kann. Es kann vorgesehen sein, dass die Steuerung 10 und/oder der Aktor 13 in beispielhafter Ausgestaltung der Eingabevorrichtung 4A in dem Innengehäuse 15 angeordnet sind.

Fig. 8 zeigt eine weitere gegenüber der Eingabevorrichtung 4 abgewandelte Eingabevorrichtung 4B in einem Querschnitt, wobei gleiche Bezugszeichen wie in Fig. 2, Fig. 5 und Fig. 6 gleiche oder gleichartige Elemente bezeichnen. Die Eingabevorrichtung 4B umfasst Verbindungselemente zum formschlüssigen Verbinden des Innengehäuses 15 mit dem Display 12, so dass das Innengehäuse 15 gegenüber dem Display 12 nur entlang einer Geraden bewegbar ist. Dazu umfasst ein Verbindungselement zumindest ein mit dem Lenkrad 2 oder dem Armaturenbrett 3 verbundenes bzw. verbindbares Befestigungselement 54 bzw. 55 zur Fixierung je einer Stange 50 bzw. 51. Zudem umfasst ein Verbindungselement zumindest je ein mit dem Innengehäuse 15 verbundenes Gleitelement 52 bzw. 53 mit je zumindest einem Gleitlager 56 bzw. 57, mittels dessen das Gleitelement 52 bzw. 53 entlang der Stange 50 bzw. 51 bewegbar ist. Befestigungselemente 22 und 23 und die Gleitelemente 52 bzw. 53 sind an der Innenseite eines dem Gehäuse 100 entsprechenden Gehäuse 100B befestigt.

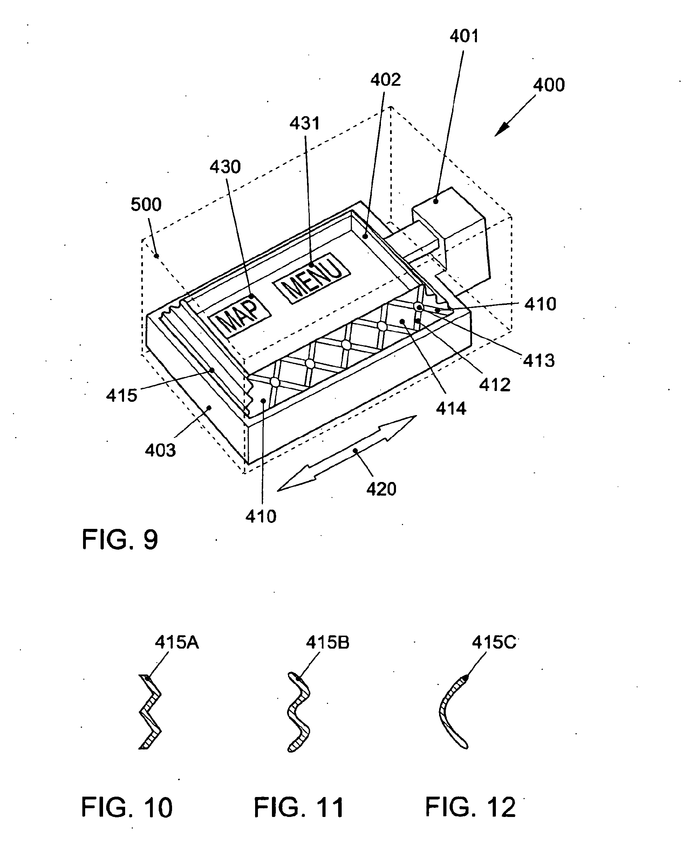

Fig. 9 zeigt ein weiteres Ausführungsbeispiel einer Eingabevorrichtung 400 zur Verwendung an Stelle der Eingabevorrichtung 4 in dem Kraftfahrzeug 1 in einer perspektivischen Draufsicht. Die Eingabevorrichtung 400 umfasst ein in einem Gehäuse 500 angeordnetes Display 403 zur optischen Darstellung von Informationen, wie zum Beispiel die in Fig. 9 mit Bezugszeichen 430 und 431 bezeichneten Bedienelemente, einen über dem Display 403 angeordneten und mit dem Display 403 verbundenen Touchscreen 402 zur Eingabe von Befehlen durch Berühren einer Bedienfläche des Touchscreens 402 und einen in dem Gehäuse 500 angeordneten Aktor 401 zum Bewegen des Touchscreens 402 gegenüber dem Display 403. Zwischen dem Touchscreens 402 und dem Display 403 ist dabei ein Spalt vorgesehen, so dass der Touchscreen 402 ohne mechanischen Oberflächenverschleiß gegenüber dem Display 403 bewegbar ist. Die Eingabevorrichtung 400 umfasst eine der Steuerung 10 entsprechende nicht dargestellte Steuerung. Der Touchscreen 402 kann z.B. einen, z.B. transparenten, Träger einschließlich eines Touchscreens im engen Sinne umfassen, der auf dem Träger angeordnet ist.

Zwischen dem Display 403 und dem Touchscreen 402 ist ein flexibles Element 410 zum Verhindern des Eindringens von Staubpartikeln (in den Spalt) zwischen dem Display 403 und dem Touchscreen 402 angeordnet. Dazu ist das flexible Element 410 umlaufend am Rand des Touchscreens 402 angeordnet. Das flexible Element 410 besitzt eine Steifigkeit, die derart auf eine Masse des Touchscreens 402 abgestimmt ist, dass der Touchscreen 402 in Verbindung mit dem flexiblen Element 410 in Bewegungsrichtung (also im vorliegenden Ausführungsbeispiel in Richtung des Doppelpfeils 420) eine mechanische Eigenfrequenz zwischen 5Hz und 150Hz aufweist.

Das flexible Element 410 besteht im wesentlichen aus einem Elastomer und umfasst - zumindest in Bewegungsrichtung (also im vorliegenden Ausführungsbeispiel in Richtung des Doppelpfeils 420) - sich im wesentlichen linear erstreckende und sich derart paarweise kreuzende Rinnen 411 und 412, dass zwei Rinnen 411 und 412 eine gemeinsame als kugelförmig aufgewölbte Kuppe ausgestaltete Kreuzungsstelle 413 aufweisen. Die Rinnen 411 und 412 sind in etwa 45° gegenüber der Bedienfläche des Touchscreens 402 geneigt. Der Übergang zwischen einer Rinne 411 bzw. 412 und einem flachen Bereich 414 weist einen Krümmungsradius auf, der das Drei- bis Fünffache der Dicke eines Materials beträgt, aus dem die Rinne 411 bzw. 412 geformt ist. Geeignete Ausgestaltungen für einen derart ausgestalteten Bereich des flexiblen Elementes 410 können der US 4 044 186 (incorporated by reference) sowie der korrespondierenden DE 2 349 499 (incorporated by reference) entnommen werden.

Das flexible Element 410 umfasst senkrecht zur Bewegungsrichtung (also im vorliegenden Ausführungsbeispiel senkrecht zur Richtung des Doppelpfeils 420) - einen gefalteten oder ausgestülpten Bereich 415. Weitere Ausführungsbeispiele eines gefalteten oder ausgestülpten Bereichs 415A, 415B und 415C sind in Fig. 10, Fig. 11 und Fig. 12 dargestellt.

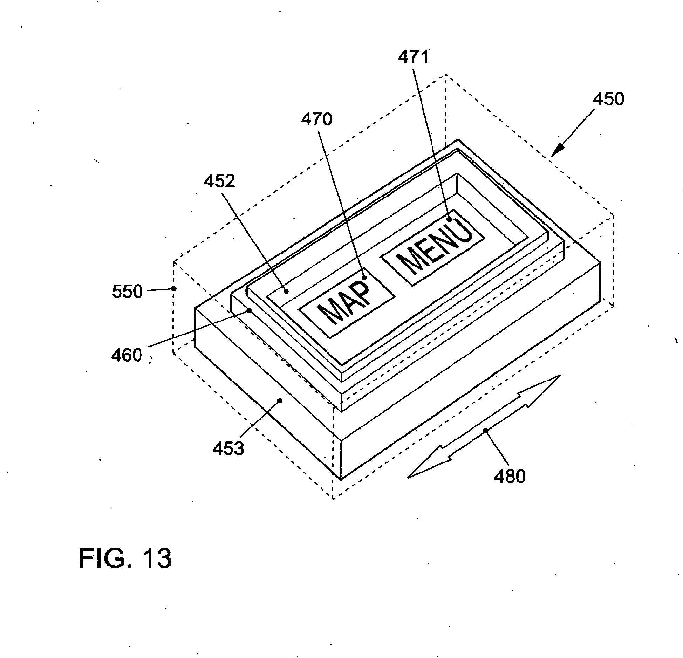

Fig. 13 zeigt ein weiteres Ausführungsbeispiel einer Eingabevorrichtung 450 zur Verwendung an Stelle der Eingabevorrichtung 4 in einer perspektivischen Draufsicht. Die Eingabevorrichtung 450 umfasst ein in einem Gehäuse 550 angeordnetes Display 453 zur optischen Darstellung von Informationen, wie zum Beispiel die in Fig. 13 mit Bezugszeichen 470 und 471 bezeichneten Bedienelemente, einen über dem Display 453 angeordneten und mit dem Display 453 verbundenen Touchscreen 452 zur Eingabe von Befehlen durch Berühren einer Bedienfläche des Touchscreens 452 und einen in dem Gehäuse 500 angeordneten, dem Aktor 401 entsprechenden in Fig. 13 jedoch nicht dargestellten Aktor zum Bewegen des Touchscreens 452 gegenüber dem Display 453. Zwischen dem Touchscreens 452 und dem Display 453 ist dabei ein Spalt vorgesehen, so dass der Touchscreen 452 ohne mechanischen Oberflächenverschleiß gegenüber dem Display 453 bewegbar ist. Die Eingabevorrichtung 450 umfasst eine der Steuerung 10 entsprechende nicht dargestellte Steuerung. Der Touchscreen 452 kann z.B. einen, z.B. transparenten, Träger einschließlich eines Touchscreens im engen Sinne umfassen, der auf dem Träger angeordnet ist.

Zwischen dem Display 453 und dem Touchscreen 452 ist ein flexibles geschäumtes Element 460 zum Verhindern des Eindringens von Staubpartikeln zwischen dem Display 453 und dem Touchscreen 452 angeordnet. Dazu ist das flexible geschäumte Element 460 umlaufend am Rand des Touchscreens 452 angeordnet. Das flexible geschäumte Element 460 besitzt eine Steifigkeit, die derart auf eine Masse des Touchscreens 452 abgestimmt ist, dass der Touchscreen 452 in Verbindung mit dem flexiblen geschäumten Element 460 in Bewegungsrichtung (also im vorliegenden Ausführungsbeispiel in Richtung des Doppelpfeils 480) eine mechanische Eigenfrequenz zwischen 5Hz und 150Hz aufweist. Das flexible geschäumte Element 460 besteht im Wesentlichen aus Polyurethan.

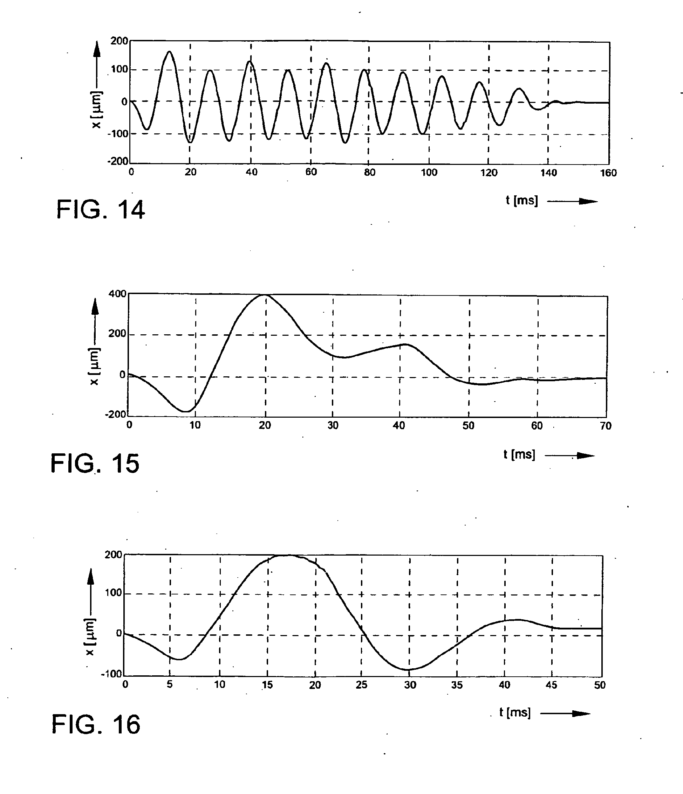

Fig. 14, Fig. 15 und Fig. 16 zeigen Ausführungsbeispiele einer Auslenkung d des Touchscreens 11, 402, 452 in Richtung der Doppelpfeile 65, 420 und 480 zur Implementierung von taktilem bzw. haptischem Feedback. Wird z.B. ein durch das Display 12, 402, 452 dargestelltes Bedienelement 60, 61, 62, 63, 430, 431, 470, 471 bedient, so erzeugt die Steuerung 10 bzw. eine der Steuerung 10 entsprechende Steuerung ein Steuersignal S zur Auslenkung des Touchscreens 11, 402, 452 entsprechend einer in Fig. 14, Fig. 15 bzw. Fig. 16 über die Zeit t dargestellten Auslenkung d.

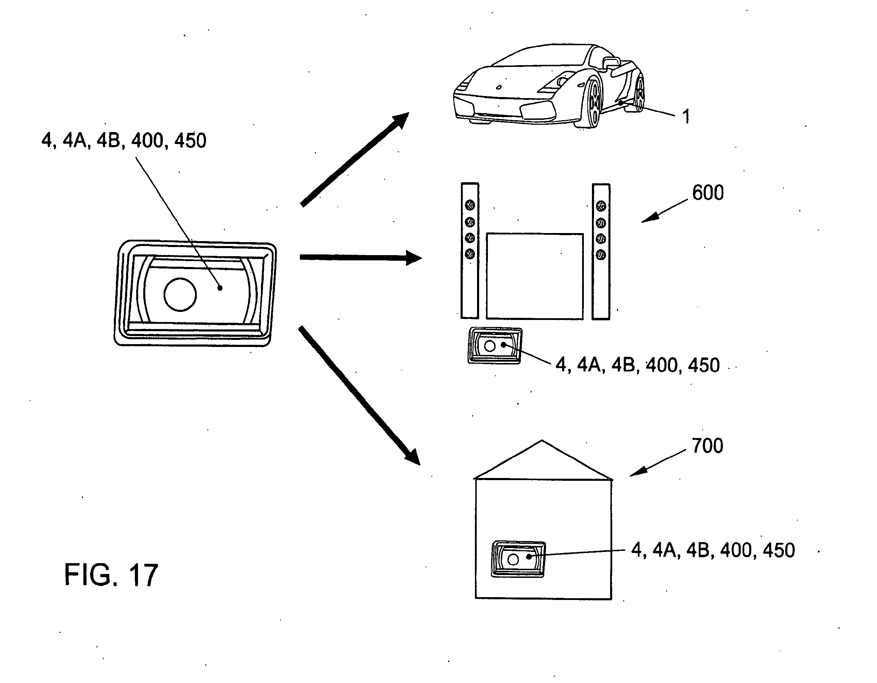

Fig. 17 zeigt die Herstellung von im Wesentlichen baugleichen der Eingabevorrichtung 4, 4A, 4B, 400 bzw. 450 entsprechenden Eingabevorrichtungen für eine Anwendung in einem Kraftfahrzeug und für zwei weitere, nicht für ein Kraftfahrzeug vorgesehene, Anwendungen. Dabei ist in beispielhafter Ausgestaltung vorgesehen, dass im Wesentlichen baugleiche der Eingabevorrichtung 4, 4A, 4B, 400 bzw. 450 entsprechende Eingabevorrichtungen entweder in einem Kraftfahrzeug wie dem Kraftfahrzeug 1, als Fernbedienung für ein Home-Cinema-System 600 oder als Mensch-Maschine-Schnittstelle 700 für eine Gebäudesteuerung eingesetzt werden. Auf diese Weise kann z.B. erreicht werden, dass dieselbe Eingabevorrichtung von einem Bediener für unterschiedliche Zwecke verwendet werden kann.

Die Elemente und Abstände in den Figuren 2 bis 13 sowie 17 sind unter Berücksichtigung von Einfachheit und Klarheit und nicht notwendigerweise maßstabsgetreu gezeichnet. So sind z.B. die Größenordnungen einiger Elemente und Abstände in den Figuren 2 bis 13 sowie 17 übertrieben gegenüber anderen Elementen und Abständen in den Figuren 2 bis 13 sowie 17 dargestellt, um das Verständnis der Ausführungsbeispiele der vorliegenden Erfindung zu verbessern.

### Bezugszeichenliste

- 1: Kraftfahrzeug
- 2: Lenkrad
- 3: Armaturenbrett
- 4, 4A, 4B, 400, 450: Eingabevorrichtung
- 5: Mittelkonsole
- 6: Haltevorrichtung
- 10: Steuerung
- 11,402,452: Touchscreen
- 12, 403, 453: Display
- 13,401: Aktor
- 14: Schicht mit einstellbarer Transparenz
- 15: Innengehäuse
- 16: Bedienfläche
- 17: Bereich
- 20, 21: Öffnung
- 22, 23: Befestigungselement
- 24, 25, 31: Manschette
- 30: Zuleitung
- 40, 41, 50, 51: Stange
- 42, 43, 52, 53: Gleitelement
- 44, 45, 54, 55: Befestigungselement
- 46, 47, 56, 57: Gleitlager
- 60, 61, 62, 63, 430,:
- 431,470,471: Bedienelement
- 65, 420, 480: Doppelpfeil
- 100, 100B, 500, 550: Gehäuse
- 100A: Arretierungsrahmen
- 101: Akku
- 102: Energieversorgungs-Schnittstelle
- 105: Eingabevorrichtungs-Schnittstelle
- 106: Kraftfahrzeug-Schnittstelle
- 130, 131: Pfeil
- 140: Anzeigesteuergerät
- 141: Schnittstelle
- 143: Bussystem
- 145: Klimaanlage
- 146: Navigationssystem
- 147: Infotainmentsystem
- 148: Telefon
- 155, 156,157, 158: Steuerung
- 200, 201, 202: Schaltung
- 410: flexibles Element
- 411,412: Rinne
- 413: Kreuzungsstelle
- 414: flacher Bereich
- 415, 415A,:
- 415B, 415C: gefalteter oder ausgestülpter Bereich
- 460: flexibles geschäumtes Element
- 600: Home-Cinema-System
- 700: Gebäudesteuerung

- A: Anzeigesignal
- d: Auslenkung
- GEO: geographische Angabe
- HAP: Haptikangabe
- MIT: Mitteilung über das Berühren des Touchscreens und/oder des Drückens auf den Touchscreen
- OUT: Ausgabeanweisung
- P: Positionssignal
- S: Aktorsteuersignal
- t: Zeit
- T: Transparenz-Steuersignal
- VID: Bildsignal

## Patentansprüche

1. Eingabevorrichtung (4), insbesondere für ein Kraftfahrzeug (1), wobei die Eingabevorrichtung (4)
- ein Gehäuse (100),
- ein in dem Gehäuse (100) angeordnetes Display (12) zur optischen Darstellung von Informationen (60, 61, 62, 63),
- einen über dem Display (12) angeordneten Touchscreen (11) zur Eingabe von Befehlen durch Berühren einer Bedienfläche (16) des Touchscreens (11) und
- eine Eingabevorrichtungs-Schnittstelle (105) zur Ausgabe einer Information über einen durch Berühren der Bedienfläche (16) des Touchscreens (11) eingegebenen Befehl
- ein in dem Gehäuse (100) angeordnetes Innengehäuse (15),
- einen zumindest zum Teil in dem Gehäuse (100) angeordneten Aktor (13) zum Bewegen des Touchscreens (11) und des Innengehäuses (15) in zumindest eine Richtung (65), und
- eine in dem Gehäuse (100) angeordnete Steuerung (10) zur Ansteuerung des Aktors (13) bei Berühren der Bedienfläche (16) in einem für eine haptische Rückkopplung vorgesehenen Bereich
umfasst, wobei das Display (12) in dem Innengehäuse (15) angeordnet ist, wobei das Innengehäuse (15) gegenüber dem Display (12) bewegbar ist, und wobei der Touchscreen (11) an dem Innengehäuse (15) befestigt ist.

2. Eingabevorrichtung (4) nach Anspruch 1, wobei die Eingabevorrichtungs-Schnittstelle (105) zur drahtlosen Datenübertragung ausgestaltet ist.

3. Eingabevorrichtung (4) nach Anspruch 1 oder 2, wobei die Schnittstelle (105) eine Bluetooth-Schnittstelle ist.

4. Eingabevorrichtung (4) nach Anspruch 1, 2 oder 3, wobei die Steuerung (10) eine Schaltung (201) zur Auswertung eines Ausgangssignals des Touchscreens (11) umfasst.

5. Eingabevorrichtung (4) nach einem der vorhergehenden Ansprüche, wobei die Steuerung (10) eine Schaltung (200) zur Steuerung (10) des Displays (12) umfasst.

6. Eingabevorrichtung (4) nach einem der vorhergehenden Ansprüche, wobei die Steuerung (10) als Platine ausgestaltet ist.

7. Kraftfahrzeug (1) mit einer, insbesondere lösbar mit dem Kraftfahrzeug (1) verbundenen, Eingabevorrichtung (4) nach einem der vorhergehenden Ansprüche.

8. Kraftfahrzeug (1) nach Anspruch 7, wobei das Kraftfahrzeug (1) weiterhin eine Haltevorrichtung (6) zur lösbaren Befestigung der Eingabevorrichtung (4) umfasst.

9. Kraftfahrzeug (1) nach Anspruch 8, wobei die Haltevorrichtung (6) in ein Lenkrad (2), in eine Mittelkonsole (5) oder in ein Armaturenbrett (3) integriert oder an einem Lenkrad (2), an einer Mittelkonsole (5) oder an einem Armaturenbrett (3) angeordnet ist.

10. Kraftfahrzeug (1) nach Anspruch 7, 8 oder 9, wobei das Kraftfahrzeug (1) weiterhin eine zu der Eingabevorrichtungs-Schnittstelle (105) korrespondierende Kraftfahrzeug-Schnittstelle (106) umfasst

11. Kraftfahrzeug (1) nach einem der Ansprüche 7 bis 10, wobei das Kraftfahrzeug (1) ein mittels der Eingabevorrichtung (4) bedienbares Funktionsmodul (145, 146, 147, 148) umfasst.

12. Kraftfahrzeug (1) nach Anspruch 11, wobei das Funktionsmodul (145, 146, 147, 148) mittels der Eingabevorrichtung (4) bedienbar ist, wenn die Eingabevorrichtung (4) nicht in der Haltevorrichtung (6) angeordnet ist.

## Claims

1. Input device (4), in particular for a motor vehicle (1), wherein the input device (4) comprises
- a housing (100),
- a display (12) which is arranged in the housing (100) and has the purpose of visually displaying information (60, 61, 62, 63),
- a touchscreen (11) which is arranged above the display (12) and has the purpose of inputting instructions by touching an operator control surface (16) of the touchscreen (11) and
- an input device interface (105) which has the purpose of outputting information by means of an instruction which is input by touching the operator control surface (16) of the touchscreen (11),
- an inner housing (15) which is arranged in the housing (100),
- an actuator (13) which is arranged at least partially in the housing (100) and has the purpose of moving the touchscreen (11) and the inner housing (15) in at least one direction (65),
- a controller (10) which is arranged in the housing (100) and has the purpose of actuating the actuator (13) when the operator control surface (16) is touched in a region which is provided for haptic feedback, wherein the display (12) is arranged in the inner housing (15), wherein the inner housing (15) can be moved with respect to the display (12), and wherein the touchscreen (11) is attached to the inner housing (15).

2. Input device (4) according to Claim 1, wherein the input device interface (105) is designed for the wireless transmission of data.

3. Input device (4) according to Claim 1 or 2, wherein the interface (105) is a Bluetooth interface.

4. Input device (4) according to Claim 1, 2 or 3, wherein the controller (10) comprises a circuit (201) for evaluating an output signal of the touchscreen (11).

5. Input device (4) according to one of the preceding claims, wherein the controller (10) comprises a circuit (200) for controlling (10) the display (12).

6. Input device (4) according to one of the preceding claims, wherein the controller (10) is embodied as a printed circuit board.

7. Motor vehicle (1) having an input device (4), which is, in particular, detachably connected to the motor vehicle (1), according to one of the preceding claims.

8. Motor vehicle (1) according to Claim 7, wherein the motor vehicle (1) also has a securing device (6) for detachably attaching the input device (4).

9. Motor vehicle (1) according to Claim 8, wherein the securing device (6) is integrated into a steering wheel (2), into a centre console (5) or into a dashboard (3) or is arranged on a steering wheel (2), on a centre console (5) or on a dashboard (3).

10. Motor vehicle (1) according to Claim 7, 8 or 9, wherein the motor vehicle (1) also comprises a motor vehicle interface (106) which corresponds to the input device interface (105).

11. Motor vehicle (1) according to one of Claims 7 to 10, wherein the motor vehicle (1) comprises a function module (145, 146, 147, 148) which can be operated by means of the input device (4).

12. Motor vehicle (1) according to Claim 11, wherein the function module (145, 146, 147, 148) can be operated by means of the input device (4) if the input device (4) is not arranged in the securing device (6).

## Revendications

1. Dispositif d'entrée (4), en particulier pour un véhicule automobile (1), le dispositif d'entrée (4) comprenant
- un boîtier (100),
- un dispositif d'affichage (12) disposé dans le boîtier (100) pour la représentation visuelle d'informations (60, 61, 62, 63),
- un écran tactile (11) disposé au-dessus du dispositif d'affichage (12) pour l'entrée d'instructions par contact avec une surface de commande (16) de l'écran tactile (11) et
- une interface du dispositif d'entrée (105) pour la sortie d'une information au moyen d'une instruction entrée par contact avec la surface de commande (16) de l'écran tactile (11),
- un boîtier intérieur (15) disposé dans le boîtier (100),
- un actionneur (13) disposé au moins en partie dans le boîtier (100) pour le déplacement de l'écran tactile (11) et du boîtier intérieur (15) dans au moins une direction (65), et
- une commande (10) disposée dans le boîtier (100) pour l'amorçage de l'actionneur (13) par contact avec la surface de commande (16) dans une plage prévue pour une réaction tactile,
le dispositif d'affichage (12) étant disposé dans le boîtier intérieur (15), le boîtier intérieur (15) pouvant être déplacé par rapport au dispositif d'affichage (12), et l'écran tactile (11) étant fixé sur le boîtier intérieur (15).

2. Dispositif d'entrée (4) selon la revendication 1, l'interface du dispositif d'entrée (105) étant conçue pour la transmission de données sans fil.

3. Dispositif d'entrée (4) selon la revendication 1 ou 2, l'interface (105) étant une interface Bluetooth.

4. Dispositif d'entrée (4) selon la revendication 1, 2 ou 3, la commande (10) comprenant un circuit (201) pour l'analyse d'un signal de sortie de l'écran tactile (11).

5. Dispositif d'entrée (4) selon l'une des revendications précédentes, la commande (10) comprenant un circuit (200) pour la commande (10) du dispositif d'affichage (12).

6. Dispositif d'entrée (4) selon l'une des revendications précédentes, la commande (10) étant conçue sous forme de platine.

7. Véhicule automobile (1) doté d'un dispositif d'entrée (4), relié en particulier de façon amovible au véhicule automobile (1), selon l'une des revendications précédentes.

8. Véhicule automobile (1) selon la revendication 7, le véhicule automobile (1) comprenant également un dispositif de retenue (6) pour la fixation amovible du dispositif d'entrée (4).

9. Véhicule automobile (1) selon la revendication 8, le dispositif de retenue (6) étant intégré dans un volant (2), dans une console centrale (5) ou dans un tableau de bord (3) ou étant disposé sur un volant (2), sur une console centrale (5) ou sur un tableau de bord (3).

10. Véhicule automobile (1) selon la revendication 7, 8 ou 9, le véhicule automobile (1) comprenant en outre une interface de véhicule automobile (106) correspondant à l'interface du dispositif d'entrée (105).

11. Véhicule automobile (1) selon l'une des revendications 7 à 10, le véhicule automobile (1) comprenant un module fonctionnel (145, 146, 147, 148) pouvant être commande au moyen du dispositif d'entrée (4).

12. Véhicule automobile (1) selon la revendication 11, le module fonctionnel (145, 146, 147, 148) pouvant être commandé au moyen du dispositif d'entrée (4), lorsque le dispositif d'entrée (4) n'est pas disposé dans le dispositif de retenue (6).
